(19) Europäisches Patentamt / European Patent Office / Office européen des brevets

(11) **EP 4 068 616 B1**

(12) **EUROPEAN PATENT SPECIFICATION**

(45) Date of publication and mention of the grant of the patent:
**16.04.2025  Bulletin 2025/16**

(21) Application number: **21165626.9**

(22) Date of filing: **29.03.2021**

(51) International Patent Classification (IPC):
*H02P 21/00* (2016.01)

(52) Cooperative Patent Classification (CPC):
**H02P 21/0007**

(54) **SPEED CONTROLLER FOR ELECTRIC MOTOR**

DREHZAHLREGLER FÜR EINEN ELEKTROMOTOR

UNITÉ DE RÉGULATION DE VITESSE POUR UN MOTEUR ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.10.2022  Bulletin 2022/40**

(73) Proprietor: **Vestel Elektronik Sanayi ve Ticaret A.S.**
**45030 Manisa (TR)**

(72) Inventor: **GÖKALAN, Rasit**
**45030 Manisa (TR)**

(74) Representative: **Page White Farrer**
**Bedford House**
**21a John Street**
**London WC1N 2BF (GB)**

(56) References cited:
CN-A- 105 141 211    CN-A- 105 811 826
CN-A- 106 849 808    CN-A- 107 070 341
CN-A- 107 070 341    CN-A- 107 370 436

• KUANG ZHI ET AL: "Speed Control of Load Torque Feedforward Compensation Based on Linear Active Disturbance Rejection for Five-Phase PMSM", IEEE ACCESS, vol. 7, 7 October 2019 (2019-10-07), pages 159787 - 159796, XP011754173, DOI: 10.1109/ACCESS.2019.2950368

• WU WEI ET AL: "Control Strategy of High Frequency injection method for permanent Magnet synchronous Motor based on improved sliding Mode Controller", 2019 CHINESE AUTOMATION CONGRESS (CAC), IEEE, 22 November 2019 (2019-11-22), pages 4553 - 4558, XP033711479, DOI: 10.1109/CAC48633.2019.8996168

• ZHANG XIAOGUANG ET AL: "Novel reaching law-based sliding-mode load torque observer for PMSM", 2016 19TH INTERNATIONAL CONFERENCE ON ELECTRICAL MACHINES AND SYSTEMS (ICEMS), THE INSTITUTE OF ELECTRICAL ENGINEERS OF JAPAN, 13 November 2016 (2016-11-13), pages 1 - 5, XP033054046

**Description**

Technical Field

The present disclosure relates to a speed controller for controlling operation of an electric motor.

Background

Electric motors are used in a large number of different applications. It is often necessary to control the speed of rotation of the rotor of the electric motor. Various different techniques for controlling the speed of rotation are known, but each suffers from one drawback or another.

Kuang Zhi et al, "Speed Control of Load Torque Feedforward Compensation Based on Linear Active Disturbance Rejection for Five-Phase PMSM", IEEE ACCESS, (2019.10.07), vol. 7, pages 159787 - 159796, discloses a control method of load torque feedforward compensation based on a linear auto disturbance rejection controller (LADRC). A load torque observer is used to observe a load torque which is used as feedforward compensation to eliminate the effects of load torque changes.

Summary

The invention is defined in the independent Claim.

One aspect of the present disclosure relates particularly to a speed controller for an electric motor that avoids using a sgn function, which therefore prevents or at least minimises chattering, and that avoids using a sqrt function, and so is faster and/or easier to implement, to calculate the switching current in the speed controller. Another aspect of the present disclosure relates particularly to a load observer for a speed controller for an electric motor that avoids using a sgn function, which therefore prevents or at least minimises chattering, and that avoids using a sqrt function, and so is faster and/or easier to implement, to calculate an estimated load torque which is used in the speed controller.

According to an aspect disclosed herein, there is provided a speed controller for controlling operation of an electric motor, the speed controller comprising:

a processing system constructed and arranged to:
calculate a reference current $I_{qr}$, which is for use in calculating drive currents for the electric motor, as the sum of a switching current $I_{q\_SW\_PI}$ and a dynamic current $I_{q\_eq}$;
wherein the processing system is configured such that the switching current $I_{q\_sw\_PI}$ is calculated using at least proportional control with a sliding surface s that is an error function based on the electrical reference speed $\omega_{ref}$ of the electric motor and the electrical measured speed $\omega_{measured}$ of the electric motor.

When calculating the switching current for use by the speed controller, this avoids using a sgn function, which therefore prevents or at least minimises chattering, and avoids using a sqrt function, and so is faster and/or easier to implement.

In an example, the processing system is configured such that the switching current $I_{q\_sw\_PI}$ is calculated using at least proportional and integral control with the sliding surface s.

In an example, the processing system is configured such that the switching current $I_{q\_sw\_PI}$ is calculated as:

$$I_{q\_sw\_PI} = k_p s + k_i \int s,$$

where:

$k_p$ is the (positive) gain factor for the proportional term of the PI (proportional-integral) controller of the switching current,
$k_i$ is the (positive) gain factor for the integral term of the PI controller of the switching current, and
s is the sliding surface.

The speed controller of this particular example may be regarded as a "PI based sliding mode speed controller", because the switching current term of the controller uses proportional and integral terms of a sliding surface, which is different from a sliding mode controller or a super twisting controller which use the sgn function in the switching current term. Further, it can be shown that such a system is asymptotically stable.

In an example, the processing system is configured such that the sliding surface s is calculated as:

$$s = k_p \, err + k_i \int err,$$

where:

*err* is the error value calculated as part of the PI control.

In an example, the processing system is configured such that the dynamic current $I_{q\_eq}$ is calculated using an estimated load torque $\hat{T}_L$.

In an example, the processing system is configured such that the dynamic current $I_{q\_eq}$ is calculated as:

$$I_{q\_eq} = \left(\dot{\omega}_{ref} + \frac{P}{J}\hat{T}_L\right)\left(\frac{2J}{3P^2}\right)\left(\frac{1}{\varphi_m+(L_d-L_q)i_d}\right),$$

where:

$J$ is the inertia of the motor,
$P$ is the number of pairs of poles of the motor,
$\varphi_m$ is the magnet flux value of the motor,
$\dot{\omega}_{ref}$ is the derivative of the electrical reference motor speed,
$\hat{T}_L$ is the estimated load torque,
$i_d$ is the measured value of the d axis current. and
$L_d$ and $L_q$ are the d and q axis stator inductance values.

In an example, the processing system is configured such that the dynamic current $I_{q\_eq}$ is calculated as:

$$I_{q\_eq} = \left(\dot{\omega}_{ref} + \frac{P}{J}\hat{T}_L\right)\left(\frac{2J}{3P^2\varphi_m}\right),$$

where:

$J$ is the inertia of the motor,
$P$ is the number of pairs of poles of the motor,
$\varphi_m$ is the magnet flux value of the motor,
$\dot{\omega}_{ref}$ is the derivative of the electrical reference motor speed,
$i_d$ is the measured value of the d axis current, and
$\hat{T}_L$ is the estimated load torque.

In an example, the processing system is configured such that the estimated load torque $\hat{T}_L$ is calculated using at least proportional control with a sliding surface $s_{obs}$ of a load observer that is an error function based on the measured rotor speed $\omega_{measured\_r}$ and the estimated rotor speed $\hat{\omega}$.

When calculating an estimated load torque which is used in the speed controller, this example avoids using a sgn function, which therefore prevents or at least minimises chattering, and that avoids using a sqrt function, and so is faster and/or easier to implement.

In an example, the processing system is configured such that the estimated load torque $\hat{T}_L$ is calculated using at least proportional and integral control with the sliding surface $s_{obs}$.

In an example, the processing system is configured such that the estimated load torque $\hat{T}_L$ is calculated as:

$$\hat{T}_L = -g\left(k_{p\omega} \cdot s_{obs} + k_{i\omega}\int s_{obs}\right)$$

where:

$\hat{\omega}$ is the estimated rotor speed (rad/s),
$\hat{T}_L$ is the estimated load torque,
$k_{p\omega}$ and $k_{i\omega}$ are the proportional and integral positive gains of the switching part of the estimated speed respectively, and
$g$ is the positive gain of load observer.

There is also disclosed herein a speed controller for controlling operation of an electric motor, the speed controller comprising:

a processing system constructed and arranged to:

calculate an estimated load torque $\hat{T}_L$ using at least proportional control with a sliding surface $s_{obs}$ of a load observer that is an error function based on the rotor speed $\omega_{measured\_r}$ and the estimated speed $\hat{\omega}$ of the rotor.

Again, when calculating an estimated load torque which is used in the speed controller, this example avoids using a sgn function, which therefore prevents or at least minimises chattering, and that avoids using a sqrt function, and so is faster and/or easier to implement.

In an example, the processing system is configured such that the estimated load torque $\hat{T}_L$ is calculated using at least proportional and integral control with the sliding surface $S_{obs}$.

In an example, the processing system is configured such that the estimated load torque $\hat{T}_L$ is calculated as:

$$\hat{T}_L = -g\left(k_{p\omega} \cdot s_{obs} + k_{i\omega} \int s_{obs}\right),$$

where:

$\hat{\omega}$ is the estimated rotor speed (rad/s),
$\hat{T}_L$ is the estimated load torque,
$k_{p\omega}$ and $k_{i\omega}$ are the proportional and integral positive gains of the switching part of the estimated speed respectively, and
$g$ is the positive gain of load observer.

There is also provided apparatus comprising an electric motor and a speed controller according to any of the examples described above for calculating drive currents for driving the electric motor.

The processing system may comprise at least one processor and at least one memory including computer program instructions, the at least one memory and the computer program instructions being configured, with the at least one processor, to cause the speed controller to operate as described above.

Brief Description of the Drawings

To assist understanding of the present disclosure and to show how embodiments may be put into effect, reference is made by way of example to the accompanying drawings in which:

Figure 1 shows schematically a block diagram for a known vector speed control of an electric motor;

Figure 2 shows schematically a block diagram for a known super twisting speed control of an electric motor;

Figure 3 shows schematically a block diagram for a known speed controller of the super twisting speed control of Figure 2;

Figure 4 shows schematically a block diagram for an example of a speed control of an electric motor according to the present disclosure;

Figure 5 shows schematically a block diagram for an example of a speed controller of the speed control of Figure 4;

Figure 6 shows schematically a block diagram for an example of a load observer of the speed control of Figure 4; and

Figure 7 shows a graph providing a comparison of vibration at different RPM (revolutions per minute) for examples of known speed controllers and a speed controller according to the present disclosure.

Detailed Description

As noted and as is well known, electric motors are used in a large number of different applications. Examples include use in air conditioner units, heating units, ventilation units, refrigeration apparatus (including refrigerators and freezers), compressors and white goods appliances generally, electric vehicles, hybrid vehicles, power tools such as drills, string grass trimmers, etc., and in many industrial and manufacturing applications.

It is often necessary to control the speed of rotation of the rotor of the electric motor. A number of techniques for this are known.

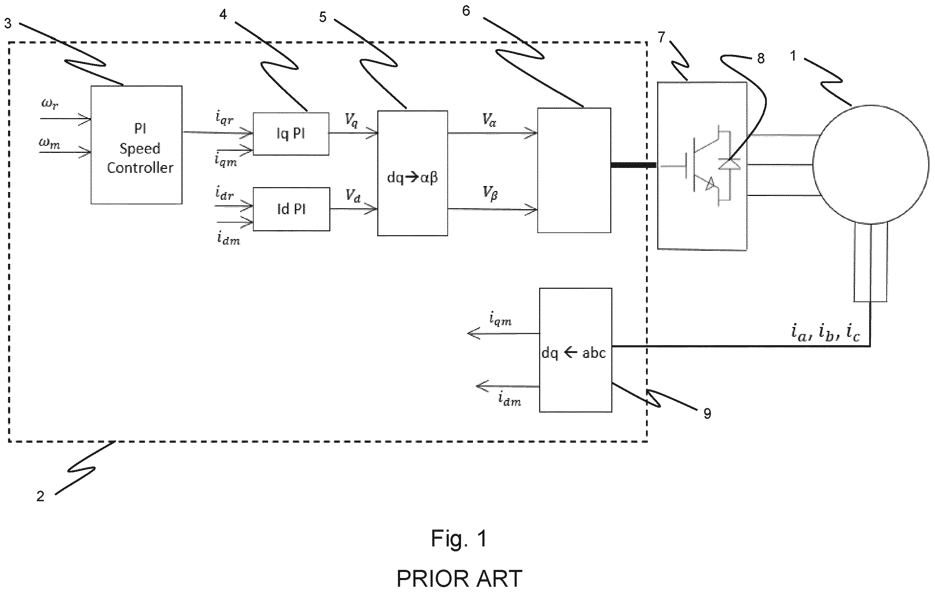

Referring for example to Figure 1, this shows schematically a block diagram for a known vector speed control of an electric motor 1. The motor 1 may be for example a three phase brushless direct current (BLDC) electric motor or a permanent magnet synchronous motor (PMSM) or some other type of synchronous motor. The control is typically implemented by one or more processors, including for example one or more microcontrollers, indicated generally at 2, running appropriate software and/or firmware. A speed controller 3 calculates and outputs a reference torque current $i_{qr}$ which is used to control the torque $T_e$ generated by the motor 1.

In this regard, the motor dynamic equation is:

$$T_e - T_L = J\frac{d\omega}{dt} \tag{1}$$

where:

$T_e$ is the generated motor torque (in NM)

$T_L$ is the load torque (in NM)

$J$ is the inertia of the motor (kgm$^2$)

$\omega$ is the (mechanical) motor speed (rad/s)

According to the dynamic equation (1), to increase the motor speed, the generated motor torque should be greater than the load torque. Conversely, to decrease the motor speed, the generated motor torque should be less than the load torque. For a stable motor speed, ideally the generated motor torque should follow the load torque instantly (which in practice cannot be achieved of course ).

Referring again to Figure 1, the speed controller 3, using PI control (see further below), takes an electrical reference motor speed $\omega_r$ and compares it with the measured motor speed $\omega_m$. If the error value ($\omega_r$ - $\omega_m$) is positive then the reference torque current $i_{qr}$ is increased so as to increase the generated torque. Conversely, if the error value is negative then the reference torque current $i_{qr}$ is decreased so as to decrease the generated torque. According to the reference and measured torque current values and via a controller 4 (see below) which outputs corresponding voltages $V_q$ , $V_d$, appropriate drive $V_\alpha$, $V_\beta$ voltages are calculated at 5 and sent to a PWM (pulse width modulation) generator 6. The PWM signal output by the PWM generator 6 is then sent through microcontroller pins to an inverter 7 (which typically uses IGBT (insulated gate bipolar transistor) switches 8 or the like). The inverter 7 causes appropriate motor phase currents $i_a$, $i_b$, $i_c$ to be produced and output to control the motor 1.

In a closed loop motor speed control system such as shown in Figure 1, the motor phase currents $i_a$, $i_b$, $i_c$ are used again as part of the feedback control. In particular, the generated motor torque $T_e$ is given by:

$$T_e = \frac{3}{2}P\left(\varphi_m i_q + \left(L_d - L_q\right)i_q i_d\right) \tag{2}$$

where:

P is the number of pairs of poles of the motor

$\varphi_m$ is the magnet flux value of the motor

$i_q$ and $i_d$ are measured values of the q and d axis currents respectively

$L_d$ and $L_q$ are the d and q axis stator inductance values respectively

The measured values of the q and d axis currents are obtained from the motor phase currents $i_a$, $i_b$, $i_c$ at 9 in Figure 1.

(As is known per se in this notation, for a three phase power supply, the "d" and "q" axes are the single-phase representations of the flux contributed by the three separate sinusoidal phase quantities at the same angular velocity. The d axis, also known as the direct axis, is the axis by which flux is produced by the field winding. The q axis, or the quadrature axis, is the axis on which torque is produced. By convention, the quadrature axis always leads the direct axis electrically by 90°. The d axis may be regarded as the main flux direction and the q axis may be regarded as the main torque-producing direction.)

Under a stable condition for the motor, the measured value of the torque current $i_q$ is equal to the reference value of the torque current $i_{qr}$. Therefore, according to (2), by controlling the reference torque current ($i_{qr}$), the generated motor torque $T_e$ can be controlled, and then according to equation (1) the speed of the motor can be controlled.

A known type of control is PI (proportional-integral) control. PI control may be regarded as a subset of PID (proportional-integral-derivative) control which employs feedback to control operation of a system. In general, a PID controller continuously calculates an error value as the difference between a desired setpoint and a measured process variable and applies a correction based on proportional, integral and derivative terms. Here, in PI current control of a motor, the proportional (P) term sets the motor current in proportion to the existing error between the set or reference current and the measured current, and the integral (I) term sets the motor current in proportion to the existing error as integrated over time (so that if the applied force is not enough to bring the error to zero, this force will be increased as time passes). The constants of proportionality are each positive and are commonly denoted by $k_p$ and $k_i$ respectively. PI control is used in the current controller 4 in Figure 1 based on the q and d axis measured currents and the reference currents.

A problem with such known, "classical" PI control is that it may be rather slow in responding to changes in the motor speed. In some applications, the load on the motor can change quite fast and therefore require fast response in the speed controller. As particular examples, in air conditioner and refrigerator and similar applications that use compressors, the compressor motor load varies during mechanical revolution of the rotor according to the suction and discharge of the gas in the compressor. If for example a low cost single rotary compressor or a low inertia motor is used in the compressor, these load variations can cause major problems and the performance of the speed controller becomes much more important. If for example the speed controller response is not fast enough for these load changes, speed variation is seen at the compressor rotor, which causes vibration and audible noise at the compressor.

Another type of motor speed controller uses a feedforward speed control technique, which can reduce vibration and noise levels. However, stability problems are observed with such speed control. Furthermore, the controller performance is highly dependent on the load torque estimation algorithm.

Yet another type of motor speed controller, which is commonly used, is the sliding mode controller, which again can reduce vibration and noise levels. Sliding mode control is a nonlinear control method that forces the system to "slide" along a cross-section (the "sliding surface") of the system's normal behaviour. Once the sliding surface is reached, sliding mode control keeps the state in the close neighbourhood of the sliding surface. This is typically achieved through use of a the sgn function. (The sgn function is such that for a real number x: sgn x = -1 if x < 0; sgn x = 0 if x = 0; and sgn x = +1 if x > 0.) However, a problem with sliding mode control is that in the vicinity of the sliding surface, the control can oscillate back and forth at a high frequency, giving rise to the known "chattering" problem. To attempt to address this, 2nd order sliding mode control is known, including for example the "super twisting" sliding mode control.

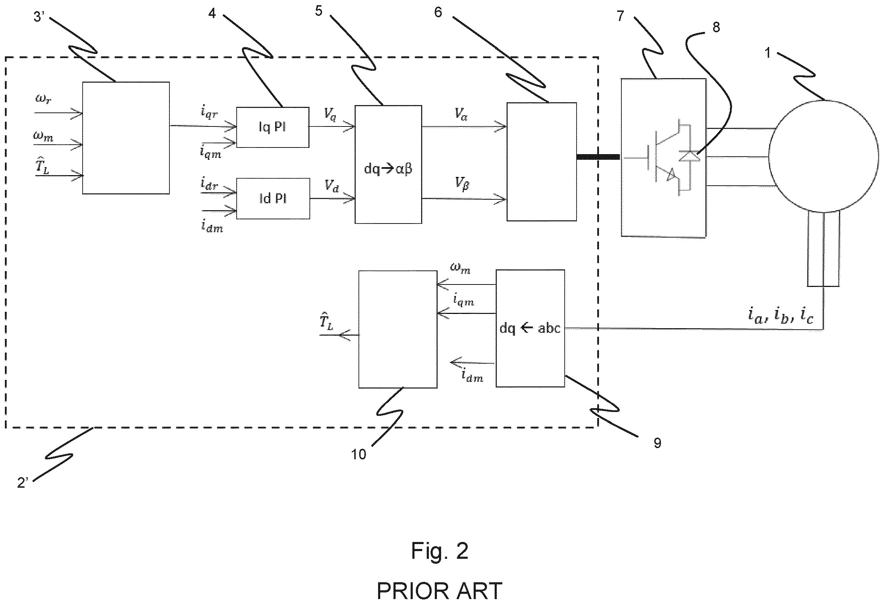

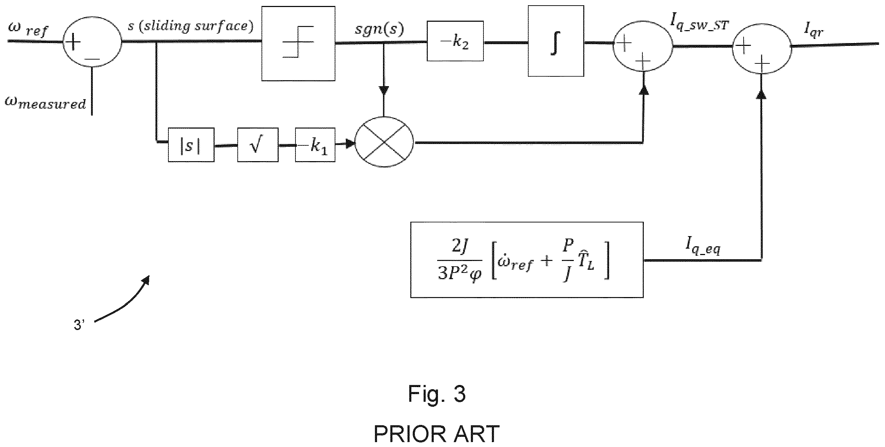

Referring to Figure 2, this shows schematically a block diagram for a known super twisting speed control of an electric motor. Figure 3 shows schematically a block diagram for a known speed controller 3' of the super twisting speed control of Figure 2. Parts that are at least generally the same as for the classical PI controller 2 of Figure 1 have the same reference numerals and will not be described in detail again.

A first difference is that the speed controller 3' uses an estimated load torque $\hat{T}_L$ to increase the response according to load changes. The estimated load torque $\hat{T}_L$ is calculated at 10 based on the measured motor speed $\omega_m$ and the measured torque current $i_{qm}$.

A second difference is that the speed controller 3' calculates and outputs the reference torque current $i_{qr}$ which is used to control the torque $T_e$ generated by the motor 1 in a rather different manner. In particular and as indicated in Figure 3, the super twisting speed controller 3' calculates the reference current $I_{qr}$ as the sum of the control reference "switching current" $I_{q\_sw\_ST}$ and the "dynamic current" $I_{q\_eq}$. The dynamic current $I_{q\_eq}$ is related to the dynamic equation of the motor and the sliding surface s and will be discussed further below. The super twisting speed controller 3' uses a second order sliding mode control, which is implemented by the control reference switching current $I_{q\_sw\_ST}$ being calculated using a sqrt() (square root) function and a sgn() (signum) function. However, a problem with the sqrt() function is that this is complex and most low cost microcontrollers cannot handle this easily or quickly; and further, use of the sgn() function still means that the reference torque current can switch at high frequency when the error is near to zero, again giving rise to the chattering problem discussed above.

A further problem with the known sliding mode controller is that the estimated load torque $\hat{T}_L$ is calculated at 10 using a load observer that uses the sliding mode technique. This therefore again can give rise the chattering problem discussed above.

In short, known PI controllers for electric motors can be relatively slow to respond to changes in load. This can lead to or allow large variations in the motor speed, which causes noise and vibration, which in some cases can be so severe as to cause damage to the motor and/or associated equipment. This is particularly the case for compressor applications, such as in air conditioners and refrigeration apparatus, especially under low speed and high load torque conditions. On the other hand, sliding mode controllers can give rise to the chattering problem described above; and second order sliding mode controllers, such as the super twisting mode controller, require fast and therefore expensive processors (for, for example, the sqrt function) and still use the sgn function and therefore can still cause the chattering problem.

One aspect of the present disclosure relates particularly to a speed controller for an electric motor that avoids using the sgn function, which therefore prevents or at least minimises chattering, and that avoids using the sqrt function, and so is faster and/or easier to implement, to calculate the switching current in the speed controller. Another aspect of the present disclosure relates particularly to a load observer for a speed controller for an electric motor that avoids using the sgn function, which therefore prevents or at least minimises chattering, and that avoids using the sqrt function, and so is faster and/or easier to implement, to calculate the estimated load torque which is used in the speed controller. In short, because the response is better with the proposed speed controller and/or load observer, rotor speed variation is reduced which minimises vibration, especially working at low speed and high torque conditions where particular problems with prior art system arise. In the particular case of air conditioners and refrigeration apparatus and other systems that use compressors, audible noise is reduced at the compressor and the risk of damage through vibration is minimised.

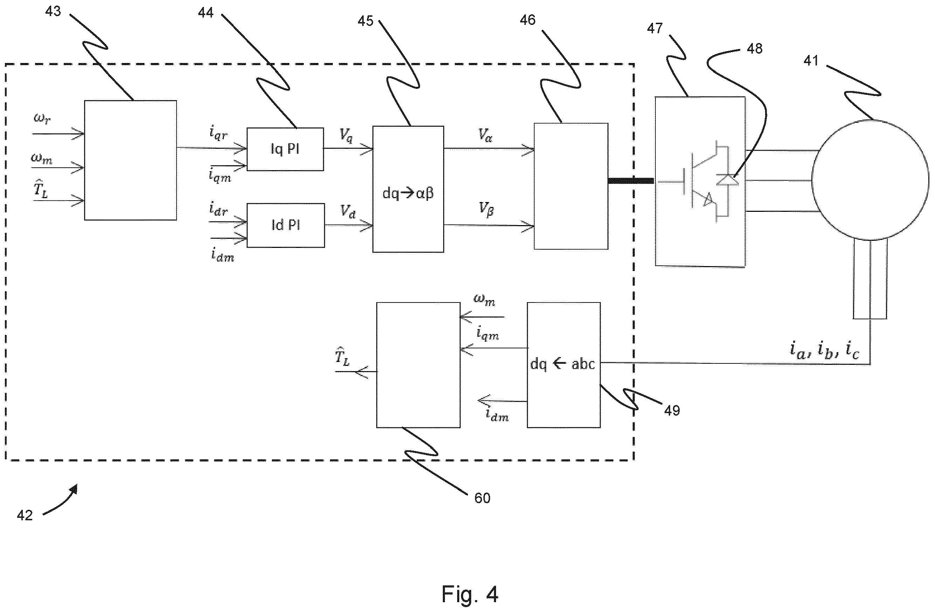

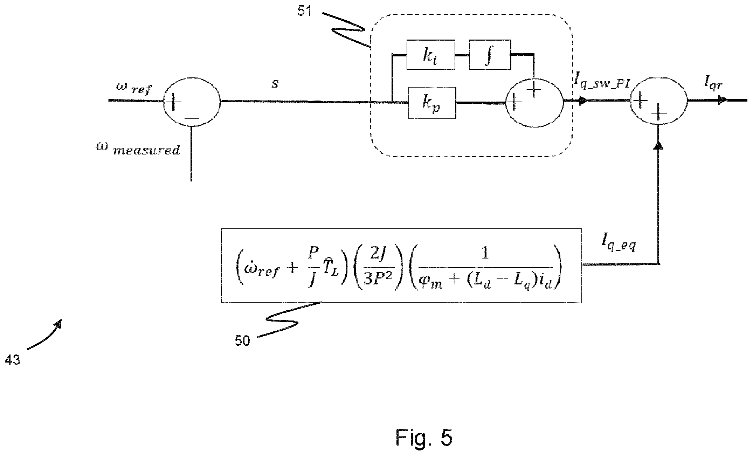

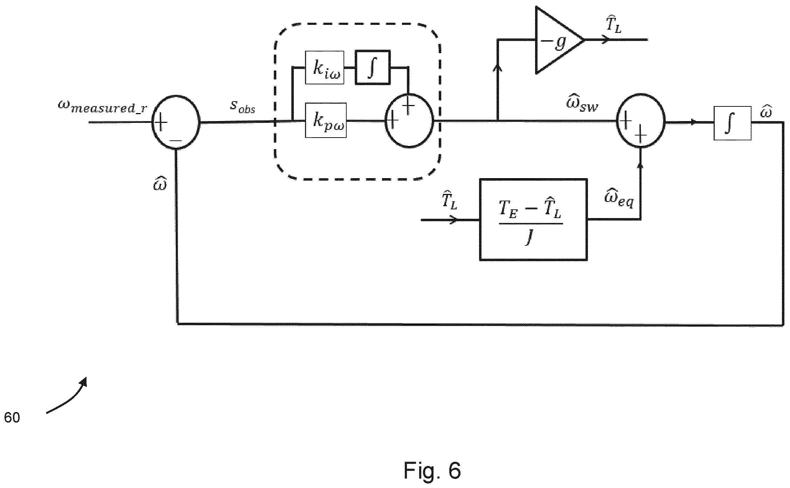

Referring to Figure 4, this shows schematically a block diagram for an example of a speed control of an electric motor 41 according to the present disclosure. Figure 5 shows schematically a block diagram for an example of a speed controller of the speed control of Figure 4; and Figure 6 shows schematically a block diagram for an example of a load observer of the speed control of Figure 4.

Referring particularly to Figure 4 first, the motor 41 may be for example a three phase brushless direct current (BLDC) electric motor or a permanent magnet synchronous motor (PMSM) or some other type of synchronous motor. Permanent magnet synchronous motors and brushless DC motors have many similarities, including for example that they both have permanent magnets on the rotor and require alternating stator currents to produce constant torque.

The control is typically implemented by one or more processors, including for example one or more microcontrollers, indicated generally at 42, running appropriate software and/or firmware. At this high level similarly to the examples described above with reference to Figures 1 and 2, a speed controller 43 calculates and outputs a reference torque current $i_{qr}$ which is used to control the torque $T_e$ generated by the motor 41. The speed controller 43 takes an electrical reference motor speed $\omega_r$ and compares it with the measured motor speed $\omega_m$. (The electrical reference motor speed $\omega_r$ is used in the speed controller 43 because it is desired to control the electrical speed.) If the error value $(\omega_r - \omega_m)$ is positive then the reference torque current $i_{qr}$ is increased so as to increase the generated torque. Conversely, if the error value is negative then the reference torque current $i_{qr}$ is decreased so as to decrease the generated torque. According to the reference and measured torque current values and via a current controller 44 which outputs corresponding voltages $V_q$, $V_d$, appropriate drive $V_\alpha$, $V_\beta$ voltages are calculated at 45 and sent to a PWM (pulse width modulation) generator 46. The PWM signal output by the PWM generator 46 is then sent through microcontroller pins to an inverter 47 (which typically uses IGBT (insulated gate bipolar transistor) switches 48 or the like). The inverter 47 causes appropriate motor phase currents $i_a$, $t_b$, $i_c$ to be produced and output to control the motor 41.

Again similarly at this high level to the example described above with reference to Figure 2, an estimated load torque $\hat{T}_L$ is used to increase the response according to load changes. The estimated load torque $\hat{T}_L$ is calculated at a load observer 60 based on the measured motor speed $\omega_m$ and the measured torque current $i_{qm}$. An example of calculation of the estimated load torque $\hat{T}_L$ according to an aspect of the present disclosure will be discussed below with particular reference to Figure 6.

Referring now to Figure 5, this shows a block diagram of an example of a speed controller 43 according to an aspect of the present disclosure, which may be used in an example in the speed control 42 shown schematically in Figure 4. As can be seen:

$$I_{qr} = I_{q\_eq} + I_{q\_sw\_PI} \qquad (3)$$

That is, the reference current $I_{qr}$ is the sum of the control reference "switching current" $I_{q\_sw\_PI}$ and the "dynamic current" $I_{q\_eq}$.

Consider first the dynamic current $I_{q\_eq}$. The dynamic current $I_{q\_eq}$ is related to the dynamic equation of the motor and the sliding surface s and can be calculated as set out below.

As is known per se, the sliding surface $s$ is the geometrical locus consisting of the boundaries along which a system that is subject to sliding mode control "slides". The value of s is ideally zero, as this indicates that the system is following the desired control precisely and is stable. In practice, the system does not follow the desired control precisely, such that $s$ is non-zero. $s$ can be regarded as a measure of the error in the control.

Let the sliding surface s be defined as the speed error value as indicated in (4):

$$s = \omega_{ref} - \omega_{measured} \qquad (4)$$

$$\dot{s} = \dot{\omega}_{ref} - \dot{\omega}_{measured} \qquad (5)$$

$\dot{s} \to 0$ is the desired condition to find $I_{q\_eq}$.

The mechanical speed of the motor is equal to the electrical speed divided by the pole pair number, so:

$$\frac{d\omega}{dt} = \frac{d\omega_{measured}}{P\,dt} = \frac{\dot{\omega}_{measured}}{P} \tag{6}$$

where:

$\omega$ is the mechanical measured speed of the motor
$\omega_{measured}$ is the electrical measured speed of the motor, and
P is the pole pair number of the motor.

As noted at (1), the motor dynamic equation is:

$$T_e - T_L = J\frac{d\omega}{dt} \tag{7}$$

Considering the motor dynamic equation (7) and from (6) writing $\frac{d\omega_{measured}}{P\,dt}$ instead of $\frac{d\omega}{dt}$, equation (7) becomes:

$$T_e - T_L = \frac{J}{P}\frac{d\omega_{measured}}{dt} = \frac{J}{P}\dot{\omega}_{measured} \tag{8}$$

As noted at (2), the torque equation of a permanent-magnet synchronous motor (PMSM) is:

$$T_e = \frac{3}{2}P\left(\varphi_m i_q + \left(L_d - L_q\right)i_d i_q\right) \tag{9}$$

Therefore, from equations (8) and (9):

$$\frac{3}{2}P\left(\varphi_m i_q + \left(L_d - L_q\right)i_d i_q\right) - T_L = \frac{J}{\mathrm{P}}\dot{\omega}_{measured} \tag{10}$$

$$\dot{\omega}_{measured} = \frac{3P^2}{2J}I_q\left(\varphi_m + \left(L_d - L_q\right)i_d\right) - \frac{P}{J}T_L \tag{11}$$

Taking $\dot{s} \to 0$ as the desired condition to find $I_{q\_eq}$, then using equation (5) and (11) we can write:

$$\dot{s} = 0 = \dot{\omega}_{ref} - \frac{3P^2}{2J}i_q\left(\varphi_m + \left(L_d - L_q\right)i_d\right) + \frac{P}{J}\hat{T}_L \tag{12}$$

where $\hat{T}_L$ is the estimated load torque.

Here, the dynamic current $I_{q\_eq}$ is equal to the measured current $I_q$ in equation (12), so in this example and as indicated at 50 in Figure 5:

$$I_{q\_eq} = \left(\dot{\omega}_{ref} + \frac{P}{J}\hat{T}_L\right)\left(\frac{2J}{3P^2}\right)\left(\frac{1}{\varphi_m + (L_d - L_q)i_d}\right) \tag{13}$$

where again:

$J$ is the inertia of the motor

$P$ is the number of pairs of poles of the motor $\varphi_m$ is the magnet flux value of the motor

$\dot{\omega}_{ref}$ is the derivative of the electrical reference motor speed

$\hat{T}_L$ is the estimated load torque (see further below)

$L_d$ and $L_q$ are the d and q axis stator inductance values respectively.

It should be noted that equation (13) for the dynamic current $I_{q\_eq}$ is derived particularly from equations (4) to (12) above. Notably, equation (13) for the dynamic current $I_{q\_eq}$ depends particularly on the dynamic equations of the motor which are (7) and (8) and the equation for the sliding surface (4). Accordingly, in other example models in which the dynamic equations of the motor or, particular, the equation for the sliding surface are different, the detailed equation for the dynamic current $I_{q\_eq}$ will be different.

In the particular case that the PMSM is a surface mount motor (surface permanent magnet motor or SPM motor), in which the permanent magnets are attached to or embedded in the surface of the rotor, then $L_d$ and $L_q$ will be equal. As another example, in the case of field oriented control of a PMSM, the direct axis component of the stator current is zero, that is $i_d = 0$. In either case, equation (13) simplifies to:

$$I_{q\_eq} = \left(\dot{\omega}_{ref} + \frac{P}{J}\hat{T}_L\right)\left(\frac{2J}{3P^2\varphi_m}\right) \qquad (14)$$

In either case, as can be seen from (13) and (14), examples of a speed controller of an aspect of the present disclosure use an estimated load torque $\hat{T}_L$ in calculating the $I_{q\_eq}$ reference current, where the estimated load torque $\hat{T}_L$ depends on the dynamic model and the sliding surface. This increases the dynamic response of the speed controller compared to the classical PI controller which does not use an estimated load torque $\hat{T}_L$ in calculating the $I_{q\_eq}$ reference current.

Referring again to Figure 5, consider now the switching current $I_{q\_sw\_PI}$ in equation (3) for calculating the reference current $I_{qr}$. Referring briefly to Figure 3, in a sliding mode controller, the switching current $I_{q\_sw}$ is calculated using a sgn function, which can still result in chattering, and in a super twisting mode controller in particular, the switching current $I_{q\_sw\_ST}$ is calculated also using a sqrt function, which is complex and therefore difficult to handle and slow to calculate in a low cost processor.

Referring back to equation (12), if $\dot{s} = 0$, then s (which can be regarded as the error or distance from the sliding surface) will be constant. Therefore, this condition in itself may not be sufficient to achieve stability.

According to an example of one aspect of the present disclosure, stability at the speed controller is achieved by use of at least proportional control, and, in a particular example, by use of proportional-integral control in the calculation of the switching current $I_{q\_sw\_PI}$ (hence, the suffix "PI" in the designation of the switching current here).

In a particular example and as indicated at 50 in Figure 5, the switching current $I_{q\_sw\_PI}$ is calculated as follows:

$$I_{q\_sw\_PI} = k_p s + k_i \int s \qquad (15)$$

where:

$k_p$ is the (positive) gain factor for the proportional term of the PI (proportional-integral) controller of the switching current

$k_i$ is the (positive) gain factor for the integral term of the PI controller of the switching current

$s$ is the sliding surface

Therefore, substituting (13) and (15) in (3) and as indicated in the block diagram of Figure 5:

$$I_{qr} = \left(\dot{\omega}_{ref} + \frac{P}{J}\hat{T}_L\right)\left(\frac{2J}{3P^2}\right)\left(\frac{1}{\varphi_m + (L_d - L_q)i_d}\right) + k_p s + k_i \int s \qquad (16)$$

As is known per se, there are numerous options for arranging the control of a system and for calculating the value of $s$ at any point in time.

As an example here, as applied to motors, s can be an error value between the electrical reference motor speed $\omega_{ref}$ and the electrical measured speed $\omega_{measured}$:

$$s = err = \omega_{ref} - \omega_{measured} \qquad (17)$$

As a particular example where the motor is subject to PI control:

$$s = k_p\, err + k_i \int err \qquad (18)$$

where *err* is the error value calculated as part of the PI control.

Under a stable condition, the sliding surface s should approach zero, as mentioned.

Notably, the switching current $I_{q\_sw\_PI}$ calculated in equation (15) is calculated using the gain factor $k_p$ for the proportional term and the gain factor $k_i$ for the integral term of the PI controller (as indicated here by the suffix "PI" in the switching current $I_{q\_sw\_PI}$). This may be contrasted with the case where the controller is a sliding mode controller or super twisting speed controller, where the control switching reference current includes the sgn () function, which causes chattering of the total reference current $I_{qr}$. The speed controller of this aspect of the present disclosure may be regarded as a "PI based sliding mode speed controller", because the switching current term of the controller uses proportional and integral terms of a sliding surface, which is different from a sliding mode controller or a super twisting controller which use the sgn function in the switching current term. Examples of a speed controller of this aspect of the present disclosure do not use a sgn function for the switching current in the speed controller, which helps to minimise or avoid the chattering that can occur with a sliding mode or super twisting speed controller. Further, again in contrast with a super twisting speed controller, examples of a speed controller of this aspect of the present disclosure do not use a sqrt() function for the switching current in the speed controller, which means that the controller can be implemented using a processor or microcontroller or other device having a lower specification and which can therefore be lower cost.

There is now provided an analysis of the requirement for stability of examples of a speed controller of the present disclosure.

As is known per se, Lyapunov functions are scalar functions that may be used to prove the stability of an equilibrium of an ordinary differential equation. According to the Lyapunov stability analysis, where s is the sliding surface, the Lyapunov "candidate function" V can be written as:

$$V = \frac{1}{2}s^2 \qquad (19)$$

Further, according to the known Lyapunov stability condition, for stability, the derivative of the candidate function V should be negative:

$$\dot{V} = s \cdot \dot{s} < 0 \qquad (20)$$

In an example (see equation (17)), the sliding surface s may be defined as:

$$s = \omega_{ref} - \omega_{measured} \qquad (21)$$

such that:

$$\dot{s} = \dot{\omega}_{ref} - \dot{\omega}_{measured} \qquad (22)$$

Now, for a motor,

$$\dot{\omega}_{measured} = \frac{3P^2}{2J} I_q\big(\varphi_m + \big(L_d - L_q\big)i_d\big) - \frac{P}{J} T_L \qquad (23)$$

where:

$I_d$ and $I_q$ are the measured stator d and q axis currents and
$T_L$ is the load torque

Therefore, substituting (23) and (22) in (20):

$$\dot{V} = s\left[\dot{\omega}_{ref} - \frac{3P^2}{2J}I_q\big(\varphi_m + (L_d - L_q)i_d\big) + \frac{P}{J}\,\mathrm{T_{Lmax}}\right] < 0 \qquad (24)$$

In equation (24), $\hat{T}_L$ is replaced by the maximum load torque value $T_{Lmax}$ to obtain stability under the maximum load condition.

Equation (24) may be regarded as providing a general stability condition for a PMSM drive system.

As noted above, under a stable condition for the motor, the measured value of the torque current $i_q$ is equal to the reference value of the torque current $i_{qr}$. Also, recalling (3) and (16) above:

$$I_{qr} = I_{q\_eq} + I_{q\_sw\_PI} \qquad (25)$$

$$I_{qr} = \left(\dot{\omega}_{ref} + \frac{P}{J}\,\hat{T}_L\right)\left(\frac{2J}{3P^2}\right)\left(\frac{1}{\varphi_m+(L_d-L_q)i_d}\right) + k_p s + k_i \int s \qquad (26)$$

Therefore, replacing $i_q$ in (24) with $I_{qr}$, the following equations can be derived:

$$\dot{V} = s\left[\dot{\omega}_{ref} - \frac{3P^2}{2J}\big(\varphi_m + (L_d - L_q)i_d\big)I_{qr} + \frac{P}{J}\,T_{Lmax}\right] < 0 \qquad (27)$$

For simplification, $\lambda$ can be written as:

$$\lambda = \frac{3P^2}{2J}\big(\varphi_m + (L_d - L_q)i_d\big) \qquad (28)$$

Then equation (27) becomes:

$$\dot{V} = s\left[\dot{\omega}_{ref} - \lambda I_{qr} + \frac{P}{J}\,T_{Lmax}\right] < 0 \qquad (29)$$

Inserting equation (26) into (29) we get:

$$\dot{V} = s\left[\dot{\omega}_{ref} - \right.$$

$$\lambda\left(\left(\dot{\omega}_{ref} + \frac{P}{J}\,T_{Lmax}\right)\left(\frac{2J}{3P^2}\right)\left(\frac{1}{\varphi_m+(L_d-L_q)i_d}\right) + k_p s + k_i \int s\right) + \left.\frac{P}{J}\,T_{Lmax}\right] < 0 \; (30)$$

$$\dot{V} = s\left[\dot{\omega}_{ref} - \lambda\left(\left(\dot{\omega}_{ref} + \frac{P}{J}\,T_{Lmax}\right)\frac{1}{\lambda} + k_p s + k_i \int s\right) + \frac{P}{J}\,T_{Lmax}\right] < 0 \qquad (31)$$

$$\dot{V} = s\left(\dot{\omega}_{ref} - \dot{\omega}_{ref} - \frac{P}{J}\,T_{Lmax} - \lambda k_p s - \lambda k_i \int s + \frac{P}{J}\,T_{Lmax}\right) < 0 \qquad (32)$$

$$\dot{V} = s\left(-\lambda k_p s - \lambda k_i \int s\right) < 0 \qquad (33)$$

$$-\lambda\left(k_p s + k_i \int s\right) < 0 \qquad (34)$$

and finally:

$$\left(k_p s + k_i \int s\right) > 0 \qquad (35)$$

Equation (35) is the simplest statement of the requirement for stability. If it can be proved that ($k_p$s + $k_i$ ∫ s) is positive, then the system is shown to be asymptotically stable.

Taking the time derivative of both sides of equation (35):

$$k_p \frac{ds}{dt} + k_i s > 0 \qquad (36)$$

And using (21), (22) and (36), the following (37) - (39) are obtained:

$$k_p\left(\dot{\omega}_{ref} - \dot{\omega}_{measured}\right) + k_i\left(\omega_{ref} - \omega_{measured}\right) > 0 \qquad (37)$$

$$k_p\dot{\omega}_{ref} + k_i\omega_{ref} > k_p\dot{\omega}_{measured} + k_i\omega_{measured} \qquad (38)$$

$$\dot{\omega}_{measured} + \frac{k_i}{k_p}\omega_{measured} < \dot{\omega}_{ref} + \frac{k_i}{k_p}\omega_{ref} \qquad (39)$$

Consider now the solution of the following homogeneous equation:

$$\dot{\omega}_{measured} + \frac{k_i}{k_p}\omega_{measured} = 0 \qquad (40)$$

Using (39) and the solution to (40):

$$\omega_{measured} = \omega_i\, e^{-\frac{k_i}{k_p}t} < \dot{\omega}_{ref} + \frac{k_i}{k_p}\omega_{ref} \qquad (41)$$

where $\omega_i$ is the initial value of $\omega_{measured}$.

Now, the initial value of $\omega_{measured}$ is zero. Therefore equation (41) becomes:

$$0 < \dot{\omega}_{ref} + \frac{k_i}{k_p}\omega_{ref} \qquad (42)$$

Now, $\dot{\omega}_{ref}$ is positive. Therefore, according to equation (42), if $k_p$ and $k_i$ are positive, which is the case with the PI control, then the system is asymptotically stable.

As discussed above, in an aspect of the present disclosure, the estimated load torque $\hat{T}_L$ is used in calculating the $I_{q\_eq}$ reference current, see equations (13) and (14), which in turn is used to calculate the reference current $I_{qr}$, see equation (3). This increases the responsiveness of the speed controller compared to a classical PI speed controller. However, as noted above, a problem with the known sliding mode controller (Figure 2) is that the estimated load torque $\hat{T}_L$ is calculated using a load observer that uses the sliding mode technique. This therefore again can give rise to the chattering problem discussed above.

Referring now to Figure 6, this shows schematically a block diagram for an example of a load observer 60 of the speed control of Figure 4 according to an aspect of the present disclosure. The load observer 60 of this aspect avoids using the sgn function, which therefore prevents or at least minimises chattering, and avoids using the sqrt function, and so is faster and/or easier to implement, to calculate an estimated load torque $\hat{T}_L$ which is used in the speed controller. Like the speed controller 43 of the first aspect described above (see particularly equation (15) above), the load observer 60 of this aspect is also PI switching based.

Before discussing the load observer dynamics, general information about a disturbance observer is given below for ease of explanation. This is discussed further in "Continuous Integral Sliding Mode Control: A Chattering Free Approach" by Asif Chalanga et al, 2013 IEEE International Symposium on Industrial Electronics.

Consider the following system:

$$\dot{x} = u + d \qquad (43)$$

where:

$$u = -k \, sgn(x) \ \in \ \mathbb{R}$$

is the control input and

$$d \in \mathbb{R}$$ is the disturbance load torque.

If $k > |d_{max}|$ then the system error $x$ will converge to zero in a finite time. Using a regularization approach, it has been shown that, when $x = 0$, then an equivalent value of control is given by $x\dot{} = 0$, which implies

$$d = k \, sgn(x) \tag{44}$$

Using (44) in the present case, we can say that the load torque is equal to switching function of observer, that is, we can replace d with the estimated load torque $\hat{T}_L$ in the load observer and replace $x$ with the observer sliding surface $s_{obs}$.

In the load observer 60 of this aspect, a PI based sliding mode load observer is used to estimate the load torque $(T_L)$.

With this in mind, the dynamic equations of an example of a load observer 60 of this aspect are as follows:

$$s_{obs} = \omega_{measured\_r} - \hat{\omega} \tag{45}$$

$$\dot{\hat{\omega}} = \hat{\omega}_{eq} + \hat{\omega}_{sw} \tag{46}$$

$$\hat{\omega}_{eq} = \frac{T_e - \hat{T}_L}{J} \tag{47}$$

$$\hat{\omega}_{sw} = k_{p\omega} \cdot s_{obs} + k_{i\omega} \int s_{obs} \tag{48}$$

$$\dot{\hat{\omega}} = \frac{T_e - \hat{T}_L}{J} + \tag{49}$$

$$\hat{T}_L = -g\hat{\omega}_{sw} \tag{50}$$

where:

$s_{obs}$ is the sliding surface of the load observer (note that this is a different sliding surface from the sliding surface s of the speed controller discussed above)

$\omega_{measured\_r}$ is the mechanical measured rotor (i.e. motor) speed (rad/s)

$\hat{\omega}$ is the estimated rotor speed (rad/s)

$\hat{T}_L$ is the estimated load torque, and

$k_{p\omega}$ and $k_{i\omega}$ are the proportional and integral positive gains of the switching part of the estimated speed respectively (which, again, are different from the proportional and integral positive gains of the speed controller discussed above).

$g$ is the positive gain of load observer

It may be noted that the mechanical rotor (i.e. motor) speed is used in the load observer 60 because the load changes according to the rotor speed.

With particular reference to (49), like the speed controller discussed above, it may be noted that the load observer of this example has a "dynamic" part $\frac{T_e - \hat{T}_L}{J}$ and a switching part ($k_{p\omega} \cdot s_{obs} + k_{i\omega} \int s_{obs}$).

The load observer 60 of this aspect therefore does not require use of a sgn function, and instead, like the speed controller described above, is fundamentally PI based, such that the estimated load torque $\hat{T}_L$ is calculated using the proportional and integral positive gains of the PI load observer and the sliding surface of the load observer.

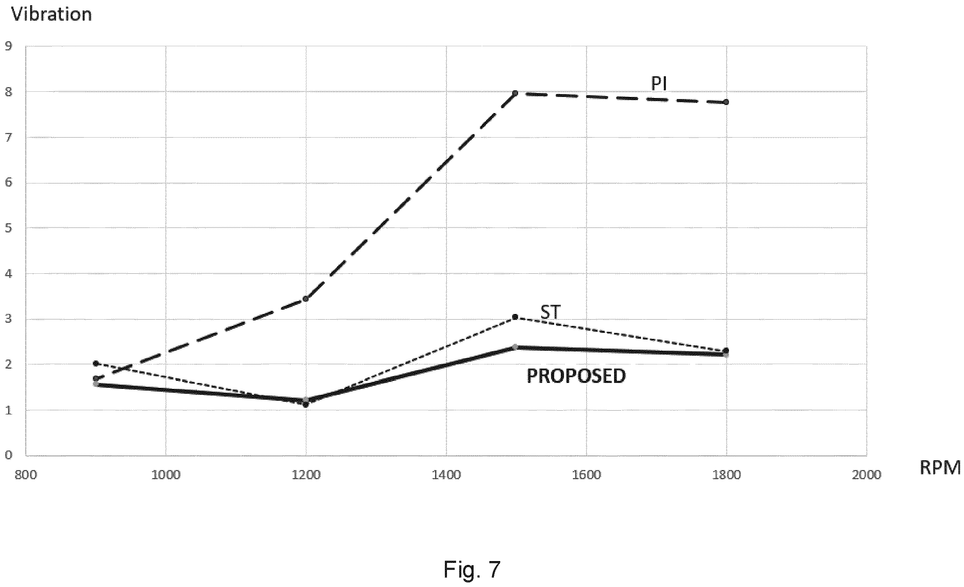

Figure 7 shows a comparison of vibration (in arbitrary units) at different RPM (revolutions per minute) for examples of known speed controllers and a speed controller according to the present disclosure as used in a compressor. Vibration was measured at the compressor pipe. The dashed line shows vibration using a classical PI controller, the dotted line shows vibration using a super twisting controller, and the solid line shows vibration using an example of a speed controller with a load observer according to examples of the present disclosure. As can be seen, there is less vibration at all essentially all motor speeds using the proposed speed controller and load observer compared to either a classical PI controller or a super twisting controller.

As some examples of variations and alternatives that may be used in aspects described herein, as noted at (17) and as applied to motors, for the speed controller, s can be an error value between the electrical reference motor speed $\omega_{ref}$ and the actual, electrical measured speed $\omega_{measured}$:

$$s = err = \omega_{ref} - \omega_{measured} \tag{17}$$

and similarly, for the load observer and as noted at (45):

$$s_{obs} = \omega_{measured\_r} - \widehat{\omega} \tag{45}$$

In either case, in general any sliding surface s that approaches zero at a stable condition can be used. Some alternatives of the sliding surface s include:

$$s = k_p\, err + k_i \int e\, rr$$

(see also (18) above)

$$s = k_p\, err + k_d e\dot{r}r$$

$$s = k_p\, err + k_i \int err + k_d e\dot{r}r$$

where *err* is the error value calculated as part of the PI control and *err* is the derivative with respect to time of the error value.

Further, in the examples described above, a PI (proportional, integral) based switching function is used for the speed controller and the load observer. In other examples, a PID (proportional, integral, derivative) or only a P (proportional) based switching function can be used for the speed controller and/or the load observer. As a particular example and referring to equation (41), writing $k_i = 0$ means that only the proportional part $k_p$ is used but the system is still stable.

It will be understood that the processor or processing system or circuitry referred to herein may in practice be provided by a single chip or integrated circuit or plural chips or integrated circuits, optionally provided as a chipset, an applicationspecific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solidstate drive (SSD) or other semiconductor-based RAM; a ROM, for example a CD ROM or a semiconductor ROM; a magnetic recording medium, for example a floppy disk or hard disk; optical memory devices in general; etc.

**Claims**

1. A speed controller (43) for controlling operation of an electric motor (41), the speed controller (43) comprising:
a processing system constructed and arranged to:

   calculate a reference current $I_{qr}$, which is for use in calculating drive currents for the electric motor (41), as the sum of a switching current $I_{q\_sw\_PI}$ and a dynamic current $I_{q\_eq}$;
   wherein the processing system is configured such that the switching current $I_{q\_sw\_PI}$ is calculated using at least proportional control with a sliding surface s that is an error function based on the electrical reference speed $\omega_{ref}$ of the electric motor (41) and the electrical measured speed $\omega_{measured}$ of the electric motor (41).

2. A speed controller (43) according to claim 1, wherein the processing system is configured such that the switching current $I_{q\_sw\_PI}$ is calculated using at least proportional and integral control with the sliding surface s.

3. A speed controller (43) according to claim 2, wherein the processing system is configured such that the switching current $I_{q\_sw\_PI}$ is calculated as:

$$I_{q\_sw\_PI} = k_p s + k_i \int s,$$

   where:

   $k_p$ is the (positive) gain factor for the proportional term of the PI (proportional-integral) controller of the switching current,
   $k_i$ is the (positive) gain factor for the integral term of the PI controller of the switching current, and
   $s$ is the sliding surface.

4. A speed controller (43) according to claim 3, wherein the processing system is configured such that the sliding surface s is calculated as:

$$s = k_p \, err + k_i \int err,$$

   where:
   $err$ is the error value calculated as part of the PI control.

5. A speed controller (43) according to any of claims 1 to 4, wherein the processing system is configured such that the dynamic current $I_{q\_eq}$ is calculated using an estimated load torque $T_L$.

6. A speed controller (43) according to claim 5, wherein the processing system is configured such that the dynamic current $I_{q\_eq}$ is calculated as:

$$I_{q\_eq} = \left(\dot{\omega}_{ref} + \frac{P}{J}\hat{T}_L\right)\left(\frac{2J}{3P^2}\right)\left(\frac{1}{\varphi_m+(L_d-L_q)i_d}\right),$$

   where:

   $J$ is the inertia of the motor (41),
   $P$ is the number of pairs of poles of the motor (41),
   $\varphi_m$ is the magnet flux value of the motor (41),
   $\dot{\omega}_{ref}$ is the derivative of the electrical reference motor speed,
   $\hat{T}_L$ is the estimated load torque,
   $i_d$ is the measured value of the d axis current. and
   $L_d$ and $L_q$ are the d and q axis stator inductance values.

7. A speed controller (43) according to claim 5, wherein the processing system is configured such that the dynamic current $I_{q\_eq}$ is calculated as:

$$I_{q\_eq} = \left(\dot{\omega}_{ref} + \frac{P}{J}\hat{T}_L\right)\left(\frac{2J}{3P^2\varphi_m}\right),$$

where:

$J$ is the inertia of the motor (41),
$P$ is the number of pairs of poles of the motor (41),
$\varphi_m$ is the magnet flux value of the motor (41),
$\dot{\omega}_{ref}$ is the derivative of the electrical reference motor speed,
$i_d$ is the measured value of the d axis current, and
$\hat{T}_L$ is the estimated load torque.

8. A speed controller (43) according to any of claims 5 to 7, wherein the processing system is configured such that the estimated load torque $\hat{T}_L$ is calculated using at least proportional control with a sliding surface $s_{obs}$ of a load observer (60) that is an error function based on the measured rotor speed $\omega_{measured\_r}$ and the estimated rotor speed $\hat{\omega}$.

9. A speed controller (43) according to claim 8, wherein the processing system is configured such that the estimated load torque $\hat{T}_L$ is calculated using at least proportional and integral control with the sliding surface $s_{obs}$.

10. A speed controller (43) according to claim 9, wherein the processing system is configured such that the estimated load torque $\hat{T}_L$ is calculated as:

$$\hat{T}_L = -g\left(k_{p\omega} \cdot s_{obs} + k_{i\omega} \int s_{obs}\right)$$

where:

$\hat{\omega}$ is the estimated rotor speed (rad/s),
$\hat{T}_L$ is the estimated load torque,
$k_{p\omega}$ and $k_{i\omega}$ are the proportional and integral positive gains of the switching part of the estimated speed respectively, and
$g$ is the positive gain of load observer (60).

11. Apparatus comprising an electric motor (41) and a speed controller (43) according to any of claims 1 to 10 for calculating drive currents for driving the electric motor (41).

**Patentansprüche**

1. Ein Drehzahlregler (43) zur Steuerung des Betriebs eines Elektromotors (41), wobei der Drehzahlregler (43) umfasst: ein Verarbeitungssystem, das dazu konstruiert und angeordnet ist, um:

Berechnen eines Referenzstrom $I_{qr}$ der zur Berechnung der Antriebsströme für den Elektromotor (41) verwendet wird, als Summe eines Schaltstroms $I_{q\_sw\_PI}$ und eines dynamischen Stroms $I_{q\_eq}$;
wobei das Verarbeitungssystem dazu eingerichtet ist, den Schaltstrom $I_{q\_sw\_PI}$ unter Verwendung mindestens der Proportionalregelung mit einer Gleitfläche s zu berechnen, die eine Fehlerfunktion basierend auf der elektrischen Referenzdrehzahl $\omega_{ref}$ des Elektromotors (41) und der elektrischen gemessenen Drehzahl $\omega_{measured}$ des Elektromotors (41) ist.

2. Ein Drehzahlregler (43) nach Anspruch 1, wobei das Verarbeitungssystem dazu eingerichtet ist, den Schaltstrom $I_{q\_sw\_PI}$ unter Verwendung mindestens der Proportional- und Integralregelung mit der Gleitfläche s zu berechnen.

3. Ein Drehzahlregler (43) nach Anspruch 2, wobei das Verarbeitungssystem dazu eingerichtet ist, den Schaltstrom $I_{q\_sw\_PI}$ wie folgt tz berechnen:
$I_{q\_sw\_PI} = k_p s + k_i \int s$, wobei: $k_p$ der (positive) Verstärkungsfaktor für den Proportionalanteil des PI (Proportional-Integral)-Reglers des Schaltstroms ist, $k_i$ der (positive) Verstärkungsfaktor für den Integralanteil des PI-Reglers des Schaltstroms ist, und s die Gleitfläche ist.

4. Ein Drehzahlregler (43) nach Anspruch 3, wobei das Verarbeitungssystem dazu eingerichtet ist, die Gleitfläche s wie folgt zu berechnen: s = $k_p$ err + $k_i$ ∫ err, wobei: err der als Teil der PI-Regelung berechnete Fehlerwert ist.

5. Ein Drehzahlregler (43) nach einem der Ansprüche 1 bis 4, wobei das Verarbeitungssystem dazu eingerichtet ist, den dynamischen Strom $I_{q\_eq}$ unter Verwendung eines geschätzten Lastmoments $\hat{T}_L$ zu berechnen.

6. Ein Drehzahlregler (43) nach Anspruch 5, wobei das Verarbeitungssystem dazu eingerichtet ist, den dynamische Strom $I_{q\_eq}$ wie folgt zu berechnen: $I_{q\_eq}$ =

$$\left(\dot{\omega}_{ref} + \frac{P}{J}\hat{T}_L\right)\left(\frac{2J}{3P^2}\right)$$

, wobei: J die Trägheit des Motors (41) ist, P die Anzahl der Polpaare des Motors (41) ist, $\varphi_m$ der Magnetflusswert des Motors (41) ist, $\dot{\omega}_{ref}$ die Ableitung der elektrischen Referenzdrehzahl des Motors ist, $\hat{T}_L$ das geschätzte Lastmoment ist, $i_d$ der gemessene Wert des d-Achsenstroms ist, und $L_d$ und $L_q$ die d- und q-Achsen-Statorinduktivitätswerte sind.

7. Ein Drehzahlregler (43) nach Anspruch 5, wobei das Verarbeitungssystem dazu eingerichtet ist, den dynamische

$$\left(\dot{\omega}_{ref} + \frac{P}{J}\hat{T}_L\right)\left(\frac{2J}{3P^2\varphi_m}\right)$$

Strom $I_{q\_eq}$ wie folgt zu berechnen: $I_{q\_eq}$ =                                , wobei: J die Trägheit des Motors (41) ist, P die Anzahl der Polpaare des Motors (41) ist, $\varphi_m$ der Magnetflusswert des Motors (41) ist, $\dot{\omega}_{ref}$ die Ableitung der elektrischen Referenzdrehzahl des Motors ist, $i_d$ der gemessene Wert des d-Achsenstroms ist, und $\hat{T}_L$ das geschätzte Lastmoment ist.

8. Ein Drehzahlregler (43) nach einem der Ansprüche 5 bis 7, wobei das Verarbeitungssystem dazu eingerichtet ist, das geschätzte Lastmoment $\hat{T}_L$ unter Verwendung mindestens der Proportionalregelung mit einer Gleitfläche $s_{obs}$ eines Lastbeobachters (60) zu berechnen, die eine Fehlerfunktion basierend auf der gemessenen Rotordrehzahl $\omega_{measured\_r}$ und der geschätzten Rotordrehzahl $\hat{\omega}$ ist.

9. Ein Drehzahlregler (43) nach Anspruch 8, wobei das Verarbeitungssystem dazu eingerichtet ist, das geschätzte Lastmoment $\hat{T}_L$ unter Verwendung mindestens der Proportional- und Integralregelung mit der Gleitfläche $s_{obs}$ zu berechnen.

10. Ein Drehzahlregler (43) nach Anspruch 9, wobei das Verarbeitungssystem dazu eingerichtet ist, das geschätzte Lastmoment $\hat{T}_L$ wie folgt zu berechnen: $\hat{T}_L$ = $-g\left(k_{p\omega} \cdot s_{obs} + k_{i\omega} \int s_{obs}\right)$, wobei: $\hat{\omega}$ die geschätzte Rotordrehzahl (rad/s) ist, $\hat{T}_L$ das geschätzte Lastmoment ist, $k_{p\omega}$ und $k_{i\omega}$ die proportionalen und integralen positiven Verstärkungen des Schaltteils der geschätzten Drehzahl sind, und g die positive Verstärkung des Lastbeobachters (60) ist.

11. Vorrichtung, umfassend einen Elektromotor (41) und einen Drehzahlregler (43) nach einem der Ansprüche 1 bis 10 zur Berechnung der Antriebsströme zum Antrieb des Elektromotors (41).

**Revendications**

1. Contrôleur de vitesse (43) permettant de contrôler le fonctionnement d'un moteur électrique (41), le contrôleur de vitesse (43) comprenant :
un système de traitement construit et agencé pour :

calculer un courant de référence $I_{qr}$ qui est à utiliser dans le calcul des courants d'entraînement du moteur électrique (41), comme la somme d'un courant de commutation $I_{q\_sw\_PI}$ et d'un courant dynamique $I_{q\_eq}$, dans lequel le système de traitement est configuré de telle sorte que le courant de commutation $I_{q\_sw\_PI}$ est calculé en utilisant au moins un contrôle proportionnel avec une surface de glissement s qui est une fonction d'erreur basée sur la vitesse électrique de référence $\omega_{ref}$ du moteur électrique (41) et sur la vitesse électrique mesurée $\omega_{measured}$ du moteur électrique (41).

**2.** Contrôleur de vitesse (43) selon la revendication 1, dans lequel le système de traitement est configuré de telle sorte que le courant de commutation $I_{q\_sw\_PI}$ est calculé en utilisant au moins un contrôle proportionnel et intégral avec la surface de glissement s.

**3.** Contrôleur de vitesse (43) selon la revendication 2, dans lequel le système de traitement est configuré de telle sorte que le courant de commutation $I_{q\_sw\_PI}$ est calculé comme suit :

$$I_{q\_sw\_PI} = k_p s + k_i \int s,$$

où :

$k_p$ est le facteur de gain (positif) pour le terme proportionnel du contrôleur PI (proportionnel, intégral) du courant de commutation,
$k_i$ est le facteur de gain (positif) pour le terme intégral du contrôleur PI du courant de commutation, et
s est la surface de glissement.

**4.** Contrôleur de vitesse (43) selon la revendication 3, dans lequel le système de traitement est configuré de telle sorte que la surface de glissement s est calculée comme suit :

$$s = k_p \, err + \, k_i \int err,$$

où :

$err$ est la valeur d'erreur calculée dans le cadre du contrôle PI.

**5.** Contrôleur de vitesse (43) selon l'une quelconque des revendications 1 à 4, dans lequel le système de traitement est configuré de telle sorte que le courant dynamique $I_{q\_eq}$ est calculé en utilisant un couple de charge estimé $\hat{T}_L$,

**6.** Contrôleur de vitesse (43) selon la revendication 5, dans lequel le système de traitement est configuré de telle sorte que le courant dynamique $I_{q\_en}$ est calculé comme suit :

$$I_{q\_eq} = \left(\dot{\omega}_{ref} + \frac{P}{J}\hat{T}_L\right)\left(\frac{2J}{3P^2}\right)\left(\frac{1}{\varphi_m + (L_d - L_q)i_d}\right),$$

où :

$J$ est l'inertie du moteur (41),
$P$ est le nombre de paires de pôles du moteur (41),
$\varphi_m$ est la valeur de flux magnétique du moteur (41),
$\dot{\omega}_{ref}$ est la dérivée de la vitesse de référence électrique du moteur,
$\hat{T}_L$ est le couple de charge estimé,
$i_d$ est la valeur mesurée du courant d'axe d, et
$L_d$ and $L_q$ sont les valeurs d'inductance de stator d'axes d et q.

**7.** Contrôleur de vitesse (43) selon la revendication 5, dans lequel le système de traitement est configuré de telle sorte que le courant dynamique $I_{q\_en}$ est calculé comme suit :

$$I_{q\_eq} = \left(\dot{\omega}_{ref} + \frac{P}{J}\hat{T}_L\right)\left(\frac{2J}{3P^2\varphi_m}\right),$$

où :

$J$ est l'inertie du moteur (41),
$P$ est le nombre de paires de pôles du moteur (41),
$\varphi_m$ est la valeur de flux magnétique du moteur (41),
$\dot{\omega}_{ref}$ est la dérivée de la vitesse de référence électrique du moteur,

$i_d$ est la valeur mesurée du courant d'axe d, et
$\hat{T}_L$ est le couple de charge estimé.

8. Contrôleur de vitesse (43) selon l'une quelconque des revendications 5 à 7, dans lequel le système de traitement est configuré de telle sorte que le couple de charge estimé $\hat{T}_L$ est calculé en utilisant au moins un contrôle proportionnel avec une surface de glissement $s_{obs}$ d'un observateur de charge (60) qui est une fonction d'erreur basée sur la vitesse de rotor mesurée $\omega_{measured\_r}$ et la vitesse de rotor estimée $\hat{\omega}$.

9. Contrôleur de vitesse (43) selon la revendication 8, dans lequel le système de traitement est configuré de telle sorte que le couple de charge estimé $\hat{T}_L$ est calculé en utilisant au moins un contrôle proportionnel et intégral avec la surface de glissement $s_{obs}$.

10. Contrôleur de vitesse (43) selon la revendication 9, dans lequel le système de traitement est configuré de telle sorte que le couple de charge estimé $\hat{T}_L$ est calculé comme suit :

$$\hat{T}_L = -g\left(k_{p\omega} \cdot s_{obs} + k_{i\omega} \int s_{obs}\right),$$

où :

$\hat{\omega}$ est la vitesse de rotor estimée (rad/s),
$\hat{T}_L$ est le couple de charge estimé,
$k_{p\omega}$ and $k_{i\omega}$ sont respectivement les gains positifs proportionnels et intégraux de la partie commutation de la vitesse estimée, et
$g$ est le gain positif d'un observateur de charge (60).

11. Appareil comprenant un moteur électrique (41) et un contrôleur de vitesse (43) selon l'une quelconque des revendications 1 à 10 pour permettre de calculer des courants d'entraînement destinés à entraîner le moteur électrique (41).

Fig. 1

PRIOR ART

Fig. 2
PRIOR ART

Fig. 3
PRIOR ART

Fig. 4

EP 4 068 616 B1

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KUANG ZHI et al.** Speed Control of Load Torque Feedforward Compensation Based on Linear Active Disturbance Rejection for Five-Phase PMSM. *IEEE ACCESS*, 07 October 2019, vol. 7, 159787-159796

- **ASIF CHALANGA et al.** Continuous Integral Sliding Mode Control: A Chattering Free Approach. *IEEE International Symposium on Industrial Electronics*, 2013